# EUROPÄISCHE PATENTSCHRIFT

(11) **EP 1 712 135 B1**
(45) Veröffentlichungstag und Bekanntmachung des Hinweises auf die Patenterteilung: **22.08.2007**
(21) Anmeldenummer: 05007894.8
(22) Anmeldetag: 11.04.2005
(51) Int. Cl.: A22C 11/00

(54) **Vorrichtung und Verfahren zum geordneten Ablegen von getrennten Wurstportionen**
Device and method for depositing single sausages in an ordered manner
Procédé et dispositif pour la production de saucisses

(43) Veröffentlichungstag der Anmeldung: 18.10.2006
(73) Patentinhaber: Albert Handtmann Maschinenfabrik GmbH & Co. KG, 88400 Biberach (DE)
(72) Erfinder: Reutter, Siegfried, 88436 Eberhardzell (DE)
(74) Vertreter: Grünecker, Kinkeldey, Stockmair & Schwanhäusser Anwaltssozietät

(56) Entgegenhaltungen:
- EP-A- 0 093 037
- DE-A1- 4 410 391
- US-A- 4 747 767
- US-B1- 6 645 062

## Beschreibung

Die vorliegende Erfindung betrifft eine Vorrichtung sowie ein Verfahren zum geordneten Ablegen von getrennten Wurstportionen. Das geordnete Ablegen, von Worstportionen ist aus beilspielsweise DE-4410391 bekannt.

Bei der vollautomatischen Wurstherstellung werden üblicherweise Füllmaschinen eingesetzt, die die Wurstgeometrie bezüglich Länge, Gewicht und Kaliber bestimmen. Hier umfasst der Begriff "Füllmaschine" die gesamte wurstproduzierende Einheit, bestehend aus Vakuumfüller, Abdreheinheit, Längeneinheit inklusive Trenneinheit.

Zahlreiche Füllmaschinen besitzen eine Schneideeinrichtung, um den produzierten Wurststrang in einzelne Wurstportionen, d. h. Einzelwürste oder Wurstketten mit vorbestimmter Anzahl, zu unterteilen. Nachdem die abgeteilten Wurstportionen die Füllmaschine verlassen haben, liegen diese ungeordnet auf den dafür vorgesehenen Tisch oder einem Transportband. Ein Transportband kann z. B. als Zuführung für übergeordnete Systeme, wie Gefriertunnel oder Kochanlage, dienen.

Werden Wurstportionen ungeordnet auf einen Tisch oder auf ein Transportband übergeben, so sind diese mit einem erhöhten händischen Sortieraufwand in eine geeignete Verpackung geordnet abzulegen. Bei ungeordneter Übergabe in einen Gefriertunnel oder eine Durchlaufkochanlage kann keine optimale Verteilung erfolgen, da die Wurst chaotisch übereinanderliegen. Somit wird nicht der maximale Durchsatz durch die weiterbehandelnden Anlagen erreicht.

Es ist daher die Aufgabe der vorliegenden Erfindung, eine Vorrichtung und ein Verfahren bereitzustellen, die einzelne Wurstportionen nach dem Verlassen der Füllmaschine übernehmen und hinsichtlich Stückzahl und Position geordnet ablegen.

Erfindungsgemäß wird diese Aufgabe durch die Merkmale der Patentansprüche 1 und 12 gelöst.

Gemäß der vorliegenden Erfindung können die einzelnen Wurstportionen hinsichtlich Stückzahl und Position geordnet in einer Reihe abgegeben werden. Somit kann der maximale Durchsatz durch weiterbehandelnde Anlagen erreicht werden. In diesem Zusammenhang bedeutet der Ausdruck getrennte Wurstportion voneinander getrennte Einzelwürste oder Wurstketten mit einer bestimmten Anzahl von Würsten.

Gemäß der vorliegenden Erfindung können getrennte einzelne Wurstportionen, d. h. entweder Einzelwürste oder Wurstketten mit einer bestimmten Anzahl von Würsten von der Füllmaschine übernommen werden und in Transportrichtung weiterbefördert werden.

Wenn z. B. die einzelnen Wurstportionen zumindest teilweise mit einer größeren Geschwindigkeit weiterbefördert werden, als die Transporteinrichtung einer Füllmaschine, die die Wurstportionen befördert, bildet sich eine Lücke zwischen den einzelnen Wurstportionen aus. Jede Lücke dient zur exakten Positionierung der einzelnen Wurstportionen, so dass dann eine Übergabeeinrichtung zielsicher die einzelnen Wurstportionen seitlich von der Beschleunigungseinrichtung schieben kann. Die Wurstportionen können dann entweder einem Magazin oder einem weiteren Transportband oder Schalen, etc. gezielt übergeben werden. Die Beschleunigungseinrichtung kann so z. B. ein Beschleunigungsband umfassen, das entweder schneller läuft als eine Transporteinrichtung der Füllmaschine oder beim Übergang einer Wurstportion oder einer Trennstelle zweier Wurstportionen kurzzeitig schneller läuft. Somit ist sichergestellt, dass die einzelnen Wurstportionen einen definierten Abstand, d. h. eine Lücke zueinander aufweisen.

Vorzugsweise weist die Beschleunigungseinrichtung eine seitliche Führung auf, damit die einzelnen Wurstportionen in Transportrichtung der Beschleunigungseinrichtung ausgerichtet werden, was wiederum zu einer exakten Ausrichtung der einzelnen Wurstportionen dient.

Gemäß einer bevorzugten Ausführungsform umfasst die Übergabeeinrichtung einen Übergabedrehschieber, auf dessen Welle mindestens eine Mitnehmerplatte montiert ist, die die Wurstportionen seitlich von der Beschleunigungseinrichtung schiebt. Eine derartige Übergabedrehschiebervorrichtung ist einfach zu fertigen und kann auf sichere und einfache Weise die Wurstportionen seitlich von der Beschleunigungseinrichtung, d. h. dem Beschleunigungsband, schieben.

Es ist vorteilhaft, wenn sich am in Transportrichtung hinteren Ende der Mitnehmerplatte eine Prallplatte befindet, die sich im Wesentlichen senkrecht zur Transportrichtung erstreckt. Durch die im Übergabedrehschieber integrierte Prallplatte wird die Lage der Wurstportion, die von der Beschleunigungseinrichtung geschoben werden soll, genau definiert, da die einzelne Wurstportion auf die Prallplatte aufläuft und somit eine exakt vordefinierte Position einnehmen kann.

In vorteilhafter Weise werden die Mitnehmer- und Prallplatten auf der Welle der Übergabeeinrichtung austauschbar, vorzugsweise aufsteckbar, montiert. Die Bestückung ist abhängig von der Gruppieraufgabe und ist durch einfaches Ändern der Anzahl der Mitnehmer- und Prallplatten und der Länge der Mitnehmerplatten flexibel gestaltbar. Somit kann die Vorrichtung auf einfache, schnelle und kostengünstige Art und Weise umgerüstet werden.

Die Anzahl n der Mitnehmer- oder Prallplatten entspricht der Anzahl n der Wurstportionen n, die nacheinander durch die Übergabeeinrichtung vom Beschleunigungsband in eine Reihe übergeben werden, wobei die Mitnehmerplatten in Transportrichtung nacheinander gleichmäßig über den Umfang der Welle verteilt sind. Somit können die einzelnen Wurstportionen durch einfaches Drehen des Übergabedrehschiebers nacheinander von der Beschleunigungseinrichtung geschoben werden, wobei sich der Übergabedrehschieber jeweils um eine Teilung weiter dreht. Das heißt, dass wenn n Wurstportionen in einer Reihe übergeben werden sollen, von n nacheinander auf der Beschleunigungseinrichtung einlaufenden Wurstportionen zunächst die zuerst einlaufende Wurstportion n₁ an einer ersten Stelle von der Beschleunigungseinrichtung seitlich geschoben wird und dann die n-ten einlaufende Wurstportion an einer n-ten Stelle, die sich in Transportrichtung der Beschleunigungseinrichtung vor der Endigung n-1-ten Stelle befindet vom Band geschoben wird.

Es ist vorteilhaft, wenn für jede Mitnehmerplatte ein Sensor vorgesehen ist, der das Vorhandensein einer Wurstportion im Bereich der Mitnehmerplatte, d. h. an den n Stellen, detektiert.

Gemäß einer bevorzugten Ausführungsform werden die Wurstportionen von der Beschleunigungseinrichtung zuerst einem Magazin übergeben. Vorzugsweise ist dieses Magazin ein Trommelmagazin, das mehrere um den Umfang verteilte Längsrillen zur Aufnahme der Wurstportionen umfasst. Ein Vorteil ist dadurch gegeben, dass das Trommelmagazin sehr nahe über dem weiteren Transportband bzw. Übemahmeschalen positioniert werden kann. Durch den kurzen Übergabeweg werden die Wurstportionen kontrolliert übergeben und sind nur über eine sehr kurze Distanz dem freien Fall ausgesetzt.

Im Anschluss an die Übergabeeinrichtung kann ein weiteres Förderband angeordnet sein, das sich senkrecht zur Transportrichtung der Beschleunigungseinrichtung bewegt und die geordnet abgegebenen einzelnen Wurstportionen zur weiteren Behandlung, Verpackung, etc. weiterbewegt.

Wenn n Wurstpositionen in einer Reihe übergeben werden sollen, werden vorzugsweise n Wurstportionen von der Beschleunigungseinrichtung auf eine Längsrille des Trommelmagazins geschoben, wonach sich das Trommelmagazin dreht, um die n Wurstportionen abzulegen, wobei nach der Drehung eine neue Längsrille zur Aufnahme der nächsten Wurstportionen bereitsteht. Die vorliegende Erfindung wird nachfolgend unter Bezugnahme der folgenden Zeichnungen erläutert.

Gemäß einer bevorzugten Ausführungsform ist die Mitnehmerplatte des Übergabedrehschiebers aus mehreren Mitnehmerplattensegmenten gebildet, die auf die Welle aufgeschoben werden können, wobei eines der Mitnehmerplattensegmente eine Prallplatte umfassen kann. Durch das Aufstecken einer Prallplatte und einer oder mehrerer Mitnehmerplattensegmente auf die Welle kann die Länge der Mitnehmerplatte leicht an die Portionslänge, bzw. an die gewünschte Ablageposition angepasst werden.
- Fig. 1: zeigt eine perspektivische Darstellung einer Vorrichtung gemäß der vorliegenden Erfindung;
- Fig. 2: zeigt eine Vorderansicht des Übergabedrehschiebers, wobei die Prallplatten nicht dargestellt sind;
- Fig. 3: zeigt in perspektivischer Darstellung das Trommelmagazin;
- Fig. 4A: zeigt in perspektivischer Darstellung einen Ausschnitt eines Beschleunigungsbandes;
- Fig. 4B: zeigt einen Schnitt entlang der Linie I-I in Fig. 4A;
- Fig. 5: zeigt schematisch die einer Füllmaschine nachgeordnete Vorrichtung gemäß der vorliegenden Erfindung.
- Fig. 6: zeigt eine bevorzugte Ausführungsform des Übergabedrehschiebers.

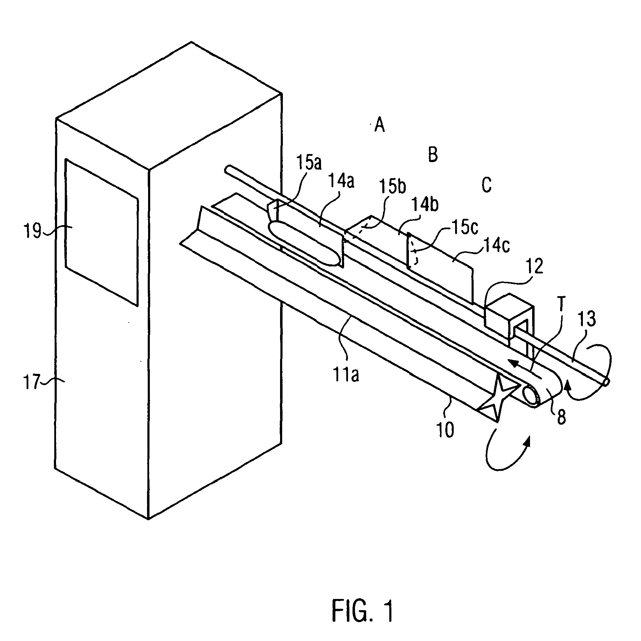

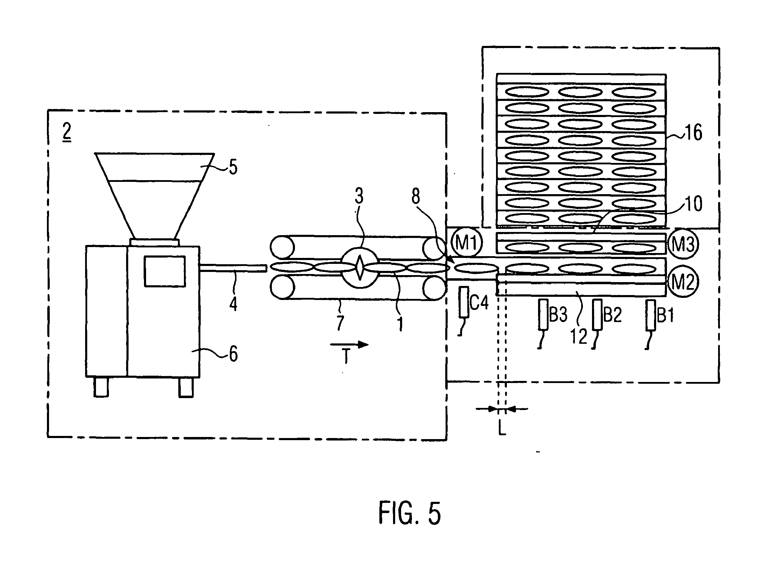

In Fig. 1 und 5 ist in schematischer Art und Weise die erfindungsgemäße Vorrichtung zum geordneten Ablegen von Wurstportionen aus einer Füllmaschine 2 gezeigt. Unter Wurstportionen 1 versteht man hier entweder Einzelwürste oder Wurstketten mit einer bestimmten Anzahl von Einzelwürsten. Der Begriff "Füllmaschine" 2 umfasst die gesamte wurstproduzierende Einheit, bestehend aus Vakuumfüller 5, 6, 4, Abdreheinheit (nicht dargestellt) sowie Längeneinheit 7, die hier als Transporteinrichtung der Füllmaschine dient. Der Vakuumfüller, wie er in Fig. 5 dargestellt ist, weist bekannterweise einen Einfülltrichter 5, zum Einfüllen von pastösem Füllgut, wie beispielsweise Wurstbrät, auf, sowie eine Fördereinrichtung, z. B. eine Flügelzellenpumpe, zum Fördern des Füllguts in ein Füllrohr 4, durch welches in bekannter Weise Wursthüllen mit pastösem Füllgut befüllt werden und anschließend beispielsweise durch Verdrängerelemente in Einzelwürste unterteilt werden und gegebenenfalls auch von einer Abdreheinrichtung abgedreht werden. Die so erzeugten Einzelwürste können dann über eine Trenneinheit 3 in einzelne Wurstportionen geschnitten werden. Die einzelnen Wurstportionen können, wie gesagt, Einzelwürste umfassen oder aber auch Wurstketten mit einer bestimmten Anzahl von Einzelwürsten. In dem in Fig. 5 gezeigten Ausführungsbeispiel werden die zusammenhängenden Würste in Einzelwürste 1 unterteilt. In den in Fig. 5 aus gezeigten Ausführungsbeispiel ist die Trenneinheit 3 in einer Längeneinheit integriert. Die Längeneinheit umfasst zwei umlaufende Transportbänder, die die gefüllten Würste halten und in Transportrichtung T mit einer ersten Geschwindigkeit V₁ transportieren.

In Fig. 5 ist die Trenneinheit 3 innerhalb der Längeneinheit 7 integriert gezeigt. Die Trenneinheit 3 kann jedoch auch nach oder vor der Transporteinrichtung 7, d. h. der Längeneinheit 7, angeordnet sein.

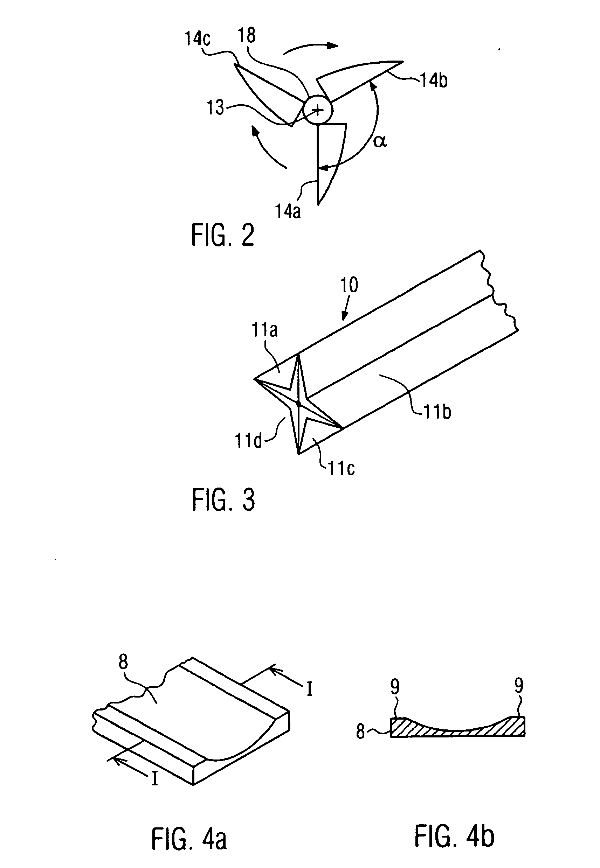

Die von der Füllmaschine 2 kommenden Wurstportionen werden von der Beschleunigungseinrichtung 8, hier dem Beschleunigungsband 8, aufgenommen und in Transportrichtung T ausgerichtet. Das Ausrichten kann beispielsweise, wie in Fig. 4A und B dargestellt ist, durch eine seitliche Bandführung 9, die in seitlichen Bereichen des Bandes 8 hervorsteht, bewirkt werden.

Dadurch, dass sich das Beschleunigungsband 8 zumindest teilweise schneller bewegt als die Transporteinrichtung 7 der Füllmaschine 2 entsteht eine Lücke 20 zwischen den Einzelwurstportionen 1. Dabei kann sich entweder das Beschleunigungsband schneller bewegen als die Transporteinrichtung 7 oder das Beschleunigungsband 8 kann beim Übergang einer Wurstportion 1 bzw. beim Übergang einer Trennstelle zweier Wurstportionen 1 kurzzeitig schneller laufen als die Transporteinrichtung 7 der Füllmaschine, so dass die einzelnen Wurstportionen 1 auseinandergezogen sind, so dass die Lücke 20 entsteht. Die Länge der Lücke ist abhängig von der Geschwindigkeitsdifferenz zwischen Transporteinrichtung 7 und Beschleunigungsband 8 und beträgt beispielsweise 20 mm.

Angetrieben werden kann die Beschleunigungseinrichtung 8 bzw. das Beschleunigungsband 8 durch den Fig. 5 dargestellten Motor M1, der bei Bedarf in der Drehzahl sowie in seinem dynamischen Verhalten eingestellt werden kann. Ebenso denkbar ist zur Regulierung der Transportgeschwindigkeit ein Staurollband mit zeitweilig von unten gebremsten Rollen. Die Beschleunigungseinrichtung 8 ist in seiner maximalen Länge nicht begrenzt. Die minimale Länge entspricht der Länge einer Wurstportion zuzüglich der Lange der Lücke.

Weiter umfasst die erfindungsgemäße Vorrichtung, wie aus Fig. 5 hervorgeht, einen Sensor C4, der im vorderen Bereich der Beschleunigungseinrichtung 8 angeordnet ist und eine fehlerhafte Wurst oder Wurstkette erkennt, so dass diese durch eine Ausschleusvorrichtung (Luft oder motorischer Antrieb) ausgesondert werden kann.

Zum Erkennen einer Trennstelle zwischen zwei Wurstportionen, woraufhin die Geschwindigkeit des Beschleunigungsbands erhöht wird, kann ein weiterer Sensor vorgesehen sein (nicht dargestellt). Der Übergangsbereich bzw. die Trennstelle kann jedoch auch durch die Einstellung der Funktionen der Längeneinheit Trenneinheit durch die Steuerung 6 ermittelt werden.

In diesem Ausführungsbeispiel wird die Lücke durch Regulieren der Geschwindigkeit der Beschleunigungseinrichtung erzielt, jedoch können die Lücken auch schon vor Übernahme gebildet worden sein.

Wie aus Fig. 1 hervorgeht, ist hinter der Beschleunigungseinrichtung 8 die Übergabeeinrichtung 12 vorgesehen, die die einzelnen Wurstportionen 1 seitlich von der Beschleunigungseinrichtung 8 schieben kann. Wie in Fig. 1 gezeigt ist, ist hier die Übergabeeinrichtung ein Übergabedrehschieber 12. Der Übergabedrehschieber 12 hat die Aufgabe, die einzelnen Wurstportionen in ein Magazin 10 zu übergeben, oder aber alternativ dazu, gleich auf ein Transportband 16 oder ein entsprechendes Behältnis, etc. (nicht dargestellt).

Der variable Übergabedrehschieber 12 umfasst in diesem Ausführungsbeispiel drei Mitnehmerplatten 14a, 14b, 14c. Die drei Mitnehmerplatten 14 dienen dazu, drei auf dem Beschleunigungsband 8 angeordnete Wurstportionen 1 nacheinander seitlich vom Band 8 zu schieben. Die Anzahl n der Mitnehmerplatten 14 entspricht der Anzahl der Wurstportionen n, die nacheinander in eine Reihe übergeben werden sollen. Die Mitnehmerplatten 14 sind in dieser Ausführungsform mit Prallplatten 15a, b, c versehen, wobei sich die Prallplatten 15 a, b, c jeweils im Wesentlichen senkrecht zur Transportrichtung T der Wurstportionen 1 erstrecken, so dass die beförderten Wurstportionen 1 gegen die Prallplatten 15 aufprallen können. Die Mitnehmer- und Prallplatten 14, 15 sind auf eine Welle 13, hier eine Mehrkantwelle, des Übergabedrehschiebers 12 abnehmbar montiert, hier aufgesteckt. Die Bestückung ist abhängig von der Gruppierungsaufgabe und ist durch einfache Änderung der Anzahl der Prallplatten bzw. der Mitnehmerplatten 14 und der Länge der Mitnehmerplatten flexibel gestaltet. Die Länge einer Mitnehmerplatte entspricht vorzugsweise mindestens der Länge einer Wurstportion. Angetrieben werden kann der variable Übergabedrehschieber 12 durch einen Servoantrieb oder ähnlich gearteten, schrittweise arbeitenden Antrieb M2 (siehe Fig. 5).

Wie aus Fig. 2 hervorgeht, sind die Mitnehmerplatten bzw. die Prallplatten 14, 15 in Transportrichtung nacheinander gleichmäßig über den Umfang der Welle 13 verteilt.

Fig. 2 zeigt die Mitnehmerplatten 14, wobei die Prallplatten 15 nicht dargestellt sind. Dies bedeutet, dass die Mitnehmerplatten 14 unter einem Winkel α von 120° zueinander angeordnet sind. Bei einer größeren Anzahl von Wurstportionen n wären die Mitnehmerplatten 14 dann um einen Winkel α von 360°/n zueinander angeordnet. Eine solche Anordnung gewährleistet, dass beispielsweise eine erste Mitnehmerplatte 14a nach einer vollen Drehung der Welle 13 wieder in der Ausgangsposition ist.

Wie aus Fig. 5 ersichtlich ist, befinden sich im Bereich der jeweiligen Mitnehmerplatten 14 Sensoren B1 bis Bn, die detektieren, ob eine Wurstportion im Bereich der Mitnehmerplatten vorhanden ist. Als Sensoren können Sensortypen jeglicher Art verwendet werden, die geeignet sind, das Vorhandensein einer Wurstportion zu erkennen. Dies können beispielsweise sein: optische, mechanische, kapazitive, bildverarbeitende oder Ultraschall-Sensoren.

In dem in den der Fig. 1 und 5 gezeigten Ausführungsbeispiel werden die einzelnen Würste bzw. Wurstportionen in einer Reihe mit drei Wurstportionen weitertransportiert (n= 3), wobei drei Mitnehmerplatten 14 vorgesehen sind (n = 3). Die Anzahl der Sensoren B hängt von der Anzahl n der Wurstportionen n ab, die nacheinander vom Beschleunigungsband 8 geschoben werden und in eine Reihe überführt werden sollen.

Weiter umfasst die Vorrichtung ein Magazin 10, hier ein Trommelmagazin 10, das in Fig. 1 und 3 näher dargestellt ist. Das Trommelmagazin 10 hat die Aufgabe, die Wurstportionen 1, die mit dem Übergabedrehschieber 12 auf Abstand und in eine definierte Position in Transportrichtung gebracht wurden, zu übernehmen und weiter zu übergeben, beispielsweise auf ein weiteres Transportband 16, wie in Fig. 5 dargestellt ist oder aber in entsprechende Schalen, etc., zu geben.

Wie aus Fig. 3 hervorgeht, weist hier das Trommelmagazin mehrere Längsrillen 11A, B, C, D auf, die zur Aufnahme der Wurstportionen 1 dienen. In Fig. 1 ist die Längsrille 11A auf der Vorderseite zu sehen, während die Längsrille 11C dem Beschleunigungsband 8 derart zugewandt ist, dass die von dem Übergabedrehschieber 12 seitlich vom Beschleunigungsband 8 geschobene Wurstportion 1 in die Längsrille 11 B fällt und von dieser sicher gehalten werden kann. Auch das Trommelmagazin 10 ist um seine Längsachse drehbar angeordnet und kann durch Drehung die aufgenommene Wurstportion 1 weiter befördern. Ein Vorteil ist dadurch gegeben, dass das Trommelmagazin 10 sehr nahe über dem weiteren Transportband 16 bzw. den Schalen positioniert werden kann. Durch den kurzen Übergabeweg werden die Wurstportionen kontrolliert übergeben und nur über eine sehr kurze Distanz dem freien Fall ausgesetzt. Die Anzahl der Magazinplätze, d. h. die Länge der Längsrillen, sowie die Anzahl der Längsrillen im Trommelmagazin kann je nach Wurstkaliber und geforderter Leistung verändert werden. Angetrieben werden kann das Trommelmagazin 10 durch einen Servoantrieb oder ähnlich gearteten schrittweise arbeitenden Antrieb M3.

Die Vorrichtung ist, wie aus Fig. 1 zu erkennen ist, an einem Gehäuse 17 angeordnet, das eine Steuerung für die Beschleunigungseinrichtung 8 sowie die Übergabeeinrichtung 12 und das Magazin 10 enthält. Weiter umfasst das Gehäuse eine Anzeige 19 sowie eine Eingabeeinheit zum Eingeben entsprechender Parameter.

Unterhalb der Beschleunigungseinrichtung 8, d. h., hier des Beschleunigungsbandes 8, bzw. unterhalb des Trommelmagazins 10 können folgende Maschinen zur Weiterverarbeitung der Wurstportionen aufgestellt werden: Förderband 16 mit oder ohne Gruppierkassetten als Puffer oder Entnahmeband, Förderband mit Gittern für Rauch- oder Trockenanlagen, Förderband mit vereinzelten Schalen zur Aufnahme der Würste. Das Förderband wird hier in Einzeltakten gefahren, bis eine vorgegebene Gruppenzahl (Anzahl an Reihen in einer Gruppe) erreicht ist. Bei Erreichen dieser gewünschten Anzahl von Wurstportionen pro Gruppe führt das Förderband eine Gruppenfahrt aus.

Zur kontinuierlichen Weiterverarbeitung kann auch ein Drahtgitterförderband als Einlauf von Brat-Frittier-Kochstraßen unterhalb des Trommelmagazins 10 angeordnet sein. Weiter kann auch ein Drahtgitterförderband als Einlauf von Kühl-Gefrierstraßen vorgesehen sein. Hierbei übernimmt das Förderband kontinuierlich die Würste vom Trommelmagazin 10.

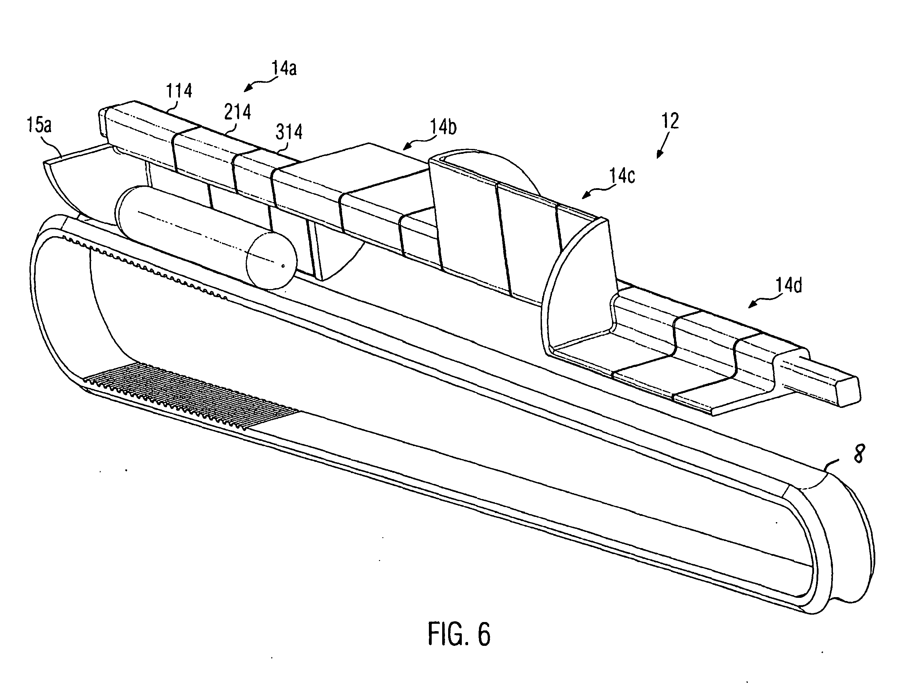

Die Figur 6 zeigt eine bevorzugte Ausführungsform des Übergabedrehschiebers 12. Hier weist der Übergabedrehschieber 12 beispielsweise vier Mitnehmerplatten 14 a - d auf, wobei die Anzahl der Mitnehmerplatten nicht auf vier beschränkt ist. Gemäß dem bevorzugten Ausführungsbeispiel sind die einzelnen Mitnehmerplatten 14 mehrteilig aus mehreren Mitnehmerplattensegmenten 114, 214, 314 aufgebaut. Das in Transportrichtung an der hintersten Stelle angeordnete Mitnehmerplattensegment 114 weist eine entsprechende Prallplatte 15 a auf. Die weiteren Segmente 214, 314 weisen keine Prallplatte auf. Das Mitnehmerplattensegment 114, das eine Prallplatte 15 a umfasst, ist beispielsweise 5 cm lang, während die Mitnehmerplattensegmente 214, 314 ohne Prallplatte kürzer als das Segment 114 sind und beispielsweise eine Länge von 4 cm aufweisen. Durch Aufstecken einer Prallplatte, d. h. eines Mitnehmerplattensegments 114 mit Prallplatte 15 a und einer oder mehrerer Mitnehmerplattensegmente 214, 314 ohne Prallplatte auf die Welle 13 kann die Länge der Mitnehmerplatte 14 leicht an die Portionslänge, bzw. an die gewünschte Ablageposition angepasst werden.

Nachfolgend wird die Funktion der erfindungsgemäßen Vorrichtung in Zusammenhang mit den Fig. 1 bis 5 näher erläutert.

Durch das Beschleunigungsband 8 werden die Wurstportionen, in Fig. 5 die Einzelwurst 1, von der Füllmaschine 2 übernommen, in einer Reihe transportiert und durch die seitliche Bandführung 9 in Richtung des Beschleunigungsbandes ausgerichtet. Da hier das Beschleunigungsband 8 zumindest teilweise schneller läuft, als die Transporteinrichtung 7 der Füllmaschine 2, die die Wurstportion produziert hat, ergibt sich zwischen den einzelnen Wurstportionen 1 bzw. an den Trennstellen der Wurstportionen eine Lücke 20. Entlang des Übergabedrehschiebers 12 befinden sich, wie zuvor beschrieben, in ihrer Position einstellbare Sensoren B1, B2, B3 die das Vorhandensein einer Wurstportion detektieren. Die Position der Sensoren B1, B2, B3 ist dabei derart eingestellt, dass sich die Sensoren B1, B2 und B3 im Bereich (A, B, C) der entsprechenden Mitnehmerplatten 14 befinden.

Läuft die erste Wurstportion 1 über das Beschleunigungsband 8 ein und erreicht die Prallplatte 15A ( Position A), so wird sie von der Prallplatte 15A aufgehalten und in eine exakte erste Position gebracht. Spricht der erste Sensor B1 an, so wird zunächst das Beschleunigungsband 8 kurz verzögert und dann dreht sich der Übergabedrehschieber 12 um eine Teilung, hier beispielsweise um 120°, so dass die Wurstportion von der Mitnehmerplatte 15A auf das Trommelmagazin 10 geschoben werden kann. Durch Drehen der Welle 13 um eine Teilung steht dann an Stelle B die Mitnehmerplatte 14B bzw. die Prallplatte 15B in Position, um eine weitere nachfolgende Wurstportion durch die Prallplatte 15B in Position zu bringen. Spricht der zweite Sensor B2 an, so dreht sich der Übergabedrehschieber 12 erneut um eine Teilung und schiebt die zweite Wurstportion vom Beschleunigungsband 8, wonach dann an der Stelle C die dritte Mitnehmer- und Prallplatte 14C, 15C in Position steht. Dieser Vorgang wiederholt sich, bis sich die gewünschte Anzahl von Wurstportionen, die in einer Reihe überführt werden sollen, vom Band geschoben worden sind. Das bedeutet, wenn die n-te einlaufende Wurstposition 1 an einer Stelle, die sich in Transportrichtung der Beschleunigungseinrichtung 8 vor der n-1-ten Stelle befindet, vom Band geschoben wird, sich die erste Mitnehmerplatte 14A wieder in der Ausgangsposition befindet. Die Anzahl der Sensoren Bn hängt von der Anzahl der Wurstportionen n ab, die nacheinander auf das Trommelmagazin 10 übergeben werden sollen.

Hat sich die Welle 13 einmal gedreht, das bedeutet, dass n Wurstportionen an das Trommelmagazin 10 übergeben worden sind, dreht sich das Trommelmagazin 10 um eine Teilung und die darauf abgelegten Wurstportionen werden auf beispielsweise das nachfolgende Transportband 16 übergeben. Die Teilung des Trommelmagazins 10 hängt ab von der Anzahl der Längsrillen 11. Bei wie in Fig. 3 dargestellten vier Längsrillen bewegt sich dann das Trommelmagazin 10 um 90°. (1 Teilung ≙ 360°/Anzahl der Längsrillen). Somit kann das Trommelmagazin 10 eine Reihe mit n Wurstportionen, hier mit 3 Wurstportionen, weitergeben.

Wird durch einen Sensor C4 im vorderen Bereich des Beschleunigungsbandes 8 festgestellt, dass eine Wurst fehlerhaft ist, so kann diese durch eine Ausschleusvorrichtung (Luft oder motorischer Antrieb) ausgesondert werden. Das weitere Verfahren wird durch das Ausschleusen der fehlerhaften Wurstportion nicht beeinflusst, da sich die Welle 13 ja erst dann weiterdreht, wenn ein entsprechender Sensor B1 bis Bn anzeigt, dass sich eine Wurstportion in den Bereich des entsprechenden Mitnehmers 14 befindet.

Wenn also eine Wurstreihe, bestehend aus n Wurstportionen, von dem Trommelmagazin 10 an die weitere Fördereinrichtung 16 übergeben worden ist, kann sich die weitere Fördereinrichtung 16 um eine Wurstbreite weiter bewegen. Das Transportband 16 kann jedoch auch weiter stehen bleiben und sich erst dann weiter bewegen, wenn mehrere Reihen von dem Trommelmagazin 10 übergeben worden sind.

Das Förderband 16 kann mit Kassetten ausgerüstet sein, die in ihrer Größe auf die projektierte Gruppenzahl (Anzahl von Reihen mit jeweils n Wurstportionen) ausgelegt sind. Alternativ kann es sich je nach Anwendung auch um ein glattes Förderband handeln.

Wie erwähnt, wird nach Übernahme jeder übernommenen Wurstreihe das Förderband um eine Wurstbreite weiter bewegt. Ist die gewünschte Gruppengröße erreicht, wird das Transportband 16 zum Anfang der nächsten Gruppe vorwärtsbewegt. Dazu wird das Förderband 16 solange bewegt, bis beispielsweise ein seitlich montierter Naherungsschalter den Steg erkennt (alternativ können Gliederkettenförderbänder mit Zahnradantrieb eingesetzt werden). Bei glatten Förderbändern (ohne Kassetten) wird eine vorgegebene Wegstrecke zurückgelegt. Am Ende des Förderbandes 16 werden die Würste bzw. Wurstketten auf ein Gitter oder in Schalen übergeben. Auch eine manuelle Entnahme von Wurstgruppen vom Förderband 16 ist denkbar, um dem Bedienerperson das Abzählen der Portionen bei der Entnahme zu ersparen.

Eine bestimmte Gruppe weist eine vorbestimmte Anzahl von Reihen auf. Die Bereitstellung von Schalen oder von Behältnissen auf dem Förderband ist ebenfalls möglich. Dabei werden mehrere Reihen mit jeweils n Wurstportionen in n Schalen oder Behältnisse von dem Trommelmagazin 10 übergeben, bevor die Schalen oder Behältnisse weg transportiert werden. Das Trommelmagazin 10 dreht sich dabei so oft, bis die gewünschte Anzahl an Wurstportionen in den entsprechenden Behältnissen aufgenommen sind. Die Behältnisse sind dabei unterhalb des Trommelmagazins 10 derart angeordnet, dass die einzelnen n Wurstportionen jeweils in die Schale oder das Behältnis übergeben werden können. Sollen beispielsweise bei den in Fig. 1 gezeigten Ausführungsbeispiel zehn Würste in jeweils drei Behältnisse übergeben werden, so müsste sich die Welle 13 insgesamt zehnmal drehen, so dass die Mitnehmerplatten 14a, b, c jeweils zehnmal eine Wurstportion 1 vom Beschleunigungsband 8 schieben können. Auch das Trommelmagazin 10 müsste sich insgesamt zehnmal um je eine Teilung drehen, so dass eine Gruppenzahl von zehn in den einzelnen Behältnissen erzielt wird.

Die Funktionen der Beschleunigungseinrichtung 8, der Übergabeeinrichtung 12 sowie des Trommelmagazins werden von der Steuerung 17 aufeinander abgestimmt.

## Patentansprüche

1. Vorrichtung zum geordneten Ablegen von getrennten Wurstportionen (1) aus einer Füllmaschine (2), **gekennzeichnet durch**
eine Beschleunigungseinrichtung (8), die die Wurstportionen (1) einer Füllmaschine (2) in einer Reihe übernimmt, und
eine Übergabeeinrichtung (12), die die einzelnen Wurstportionen (1) an definierten Stellen der Beschleunigungseinrichtung (8) seitlich von dieser schiebt.

2. Vorrichtung nach Anspruch 1, **dadurch gekennzeichnet, dass** die Beschleunigungseinrichtung (8) ein Beschleunigungsband (8) umfasst, das entweder schneller läuft als eine Transporteinrichtung (7) der Füllmaschine oder beim Übergang einer Wurstportion (1) oder Trennstelle zweier Wurstportionen (1) kurzzeitig schneller läuft, derart, dass eine Lücke (20) zwischen den einzelnen Wurstportionen entsteht.

3. Vorrichtung nach mindestens einem der Ansprüche 1 oder 2, **dadurch gekennzeichnet, dass** die Beschleunigungseinrichtung (8) eine seitliche Führung (9) aufweist.

4. Vorrichtung nach mindestens einem der vorherigen Ansprüche, **dadurch gekennzeichnet, dass** die Übergabeeinrichtung (12) einen Übergabedrehschieber (12) umfasst, auf dessen Welle (13) mindestens eine Mitnehmerplatte (14) montiert ist, die die Wurstportion seitlich von der Beschleunigungseinrichtung (8) schiebt.

5. Vorrichtung nach mindestens einem der vorherigen Ansprüche, **dadurch gekennzeichnet, dass** am in Transportrichtung T hinteren Ende der Mitnehmerplatte (14) jeweils eine Prallplatte (15) angeordnet ist, die sich im Wesentlichen senkrecht zur Transportrichtung T erstreckt.

6. Vorrichtung nach mindestens einem der vorherigen Ansprüche, **dadurch gekennzeichnet, dass** die Mitnehmer- und Prallplatten (14, 15) auf der Welle (13) austauschbar, vorzugsweise aufsteckbar montiert sind.

7. Vorrichtung nach mindestens einem der vorhergehenden Ansprüche, **dadurch gekennzeichnet, dass** die Anzahl n der Mitnehmerplatten (14) der Anzahl der Wurstportionen n entspricht, die nacheinander von der Beschleunigungseinrichtung (8) durch die Übergabeeinrichtung (12) in eine Reihe übergeben werden, wobei die Mitnehmerplatten in Transportrichtung T hintereinander gleichmäßig über den Umfang der Welle (13) verteilt angeordnet sind.

8. Vorrichtung nach mindestens einem der vorherigen Patentansprüche, **dadurch gekennzeichnet, dass** die Vorrichtung für jede Mitnehmerplatte (15) einen Sensor (B1, B2) aufweist, der das Vorhandensein einer Wurstportion (1) im Bereich der Mitnehmerplatte (15) detektiert.

9. Vorrichtung nach mindestens einem der Ansprüche 1 bis 8, **dadurch gekennzeichnet, dass** die Vorrichtung weiter ein Magazin (10) umfasst, das die Wurstportionen (1), die seitlich von der Beschleunigungseinrichtung (8) geschoben werden, übernimmt.

10. Vorrichtung nach mindestens einem der vorherigen Ansprüche, **dadurch gekennzeichnet, dass** das Magazin (10) ein Trommelmagazin ist, das mehrere um den Umfang verteilte Längsrillen (11) zur Aufnahme der Wurstportionen (1) umfasst.

11. Vorrichtung nach mindestens einem der Ansprüche 1 bis 10, **dadurch gekennzeichnet, dass** im Anschluss an die Übergabeeinrichtung (12) ein weiteres Förderband (16) angeordnet ist, das sich senkrecht zur Transportrichtung der Beschleunigungseinrichtung (12) bewegt.

12. Verfahren zum geordneten Ablegen von Wurstportionen (1), wobei
die gefüllten abgeteilten Würste in Wurstportionen (1) getrennt werden, dann
von einer Beschleunigungseinrichtung (8) übernommen und weitertransportiert werden, und dann
die Wurstportionen an definierten Stellen der Beschleunigungseinrichtung (8) seitlich von dieses geschoben werden.

13. Verfahren nach Anspruch 12, **dadurch gekennzeichnet, dass** die Beschleunigungseinrichtung (8) entweder schneller läuft als eine Transporteinrichtung der Füllmaschine (2) oder beim Übergang einer Wurstportion oder Trennstelle zweier Wurstportionen (1) schneller läuft, derart, dass eine Lücke zwischen den Wurstportionen entsteht.

14. Verfahren nach einem der Ansprüche 12 oder 13, **dadurch gekennzeichnet, dass** die von der Beschleunigungseinrichtung (8) aufgenommenen Wurstportionen (1) in Transportrichtung des Beschleunigungsbandes (8) ausgerichtet werden.

15. Verfahren nach einem der Ansprüche 12 bis 14, **dadurch gekennzeichnet, dass**, wenn n Wurstportionen (1) in einer Reihe übergeben werden sollen, von n nacheinander auf der Beschleunigungseinrichtung (8) einlaufenden Wurstportionen zunächst die zuerst einlaufende Wurstportion n₁ in einer ersten Stelle (A) von der Beschleunigungseinrichtung (8) seitlich geschoben wird und dann die n-te einlaufende Wurstportion (1) an einer n-ten Stelle (B, C), die sich in Transportrichtung der Beschleunigungseinrichtung (8) vor der n-1 ten Stelle befindet, von der Beschleunigungseinrichtung (8) geschoben wird.

16. Verfahren nach Anspruch 15, **dadurch gekennzeichnet, dass** die Wurstportionen (1) von einem Übergabedrehschieber (12) von der Beschleunigungseinrichtung geschoben werden, der n Mitnehmerplatten (14) aufweist, die in Transportrichtung nacheinander gleichmäßig über den Umfang der Welle (13) des Übergabeschiebers (12) verteilt sind und derart positioniert sind, dass sie an den n-Stellen (A, B, C) durch Drehen der Welle (13) die aufeinanderfolgenden Wurstportionen (1) nacheinander von der Beschleunigungseinrichtung (8) schieben.

17. Verfahren nach einem der Ansprüche 12 bis 16, **dadurch gekennzeichnet, dass** die Wurstportionen (1) von der Beschleunigungseinrichtung (8) in ein Trommelmagazin (10) übergeben werden.

18. Verfahren nach einem der Ansprüche 12 bis 17, **dadurch gekennzeichnet, dass**, wenn n Wurstportionen in einer Reihe übergeben werden sollen, n Wurstportionen von der Beschleunigungseinrichtung (8) auf eine Längsrille (11) des Trommelmagazins (10) geschoben werden, wonach sich das Trommelmagazin (10) dreht, um die n Wurstportionen in einer Reihe abzugeben, wobei nach der Drehung eine neue Längsrille (11) zur Aufnahme der nächsten Wurstportionen (1) bereitsteht.

19. Vorrichtung nach mindestens einem der Ansprüche 4 bis 11, **dadurch gekennzeichnet, dass** die Mitnehmerplatte 14 aus mehreren Mitnehmerplattensegmenten (114, 214, 314) gebildet ist, die auf die Welle 13 aufgesteckt sind.

20. Vorrichtung nach Anspruch 19, **dadurch gekennzeichnet, dass** eines der Mitnehmerplattensegmente (114), eine Prallplatte (15 a) umfasst.

## Claims

1. A device for the ordered deposition of parted sausage portions (1) from a filling machine (2), **characterised by**
an accelerating device (8), which accepts the sausage portions (1) in a row from a filling machine (2), and
a transfer device (12), which pushes the individual sausage portions (1) at defined points of the accelerating device (8) sideways from said device.

2. The device according to Claim 1, **characterised in that** the accelerating device (8) comprises an accelerating belt (8), which either runs faster than a transport device (7) of the filling machine or which, during the transfer of a sausage portion (1) or parting point between two sausage portions (1), briefly runs faster such that a gap (20) arises between the individual sausage portions.

3. The device according to at least one of the Claims 1 or 2, **characterised in that** the accelerating device (8) exhibits a guide (9) at the side.

4. The device according to at least one of the aforementioned claims, **characterised in that** the transfer device (12) comprises a rotary transfer vane (12), on the shaft (13) of which at least one carriage plate (14) is mounted, which pushes the sausage portion sideways from the accelerating device (8).

5. The device according to at least one of the aforementioned claims, **characterised in that** on the rear end of the carriage plate (14) in the transport direction T in each case one baffle plate (15) is arranged, which essentially extends perpendicular to the transport direction T.

6. The device according to at least one of the aforementioned claims, **characterised in that** the carriage plates and baffle plates (14, 15) are mounted, preferably by pushing on, onto the shaft (13) so that they are replaceable.

7. The device according to at least one of the aforementioned claims, **characterised in that** the number n of the carriage plates (14) corresponds to the number of sausage portions n, which are to be transferred consecutively in a row from the accelerating device (8) by the transfer device (12), wherein the carriage plates are arranged distributed behind one another uniformly over the circumference of the shaft (13) in the transport direction T.

8. The device according to at least one of the aforementioned claims, **characterised in that** the device comprises a sensor (B1, B2) for each carriage plate (15), which detects the presence of a sausage portion (1) in the region of the carriage plate (15).

9. The device according to at least one of the Claims 1 to 8, **characterised in that** the device further comprises a magazine (10), which accepts the sausage portions (1) which are pushed sideways from the accelerating device (8).

10. The device according to at least one of the aforementioned claims, **characterised in that** the magazine (10) is a drum magazine which comprises a plurality of longitudinal grooves (11) distributed around the circumference for accepting the sausage portions (1).

11. The device according to at least one of the Claims 1 to 10, **characterised in that** following the transfer device (12) a further conveyor belt (16) is arranged which moves perpendicular to the transport direction of the accelerating device (12).

12. A method for the ordered deposition of sausage portions (1), wherein
the filled parted sausages are parted separately into sausage portions (1), then
accepted by an accelerating device (8) and transported further, and then
the sausage portions are pushed at defined points of the accelerating device (8) sideways from said device.

13. The method according to Claim 12, **characterised in that** the accelerating device (8) either runs faster than a transport device of the filling machine (2) or during the transfer of a sausage portion or parting point between two sausage portions (1) it runs faster such that a gap arises-between the sausage portions.

14. The method according to one of the Claims 12 or 13, **characterised in that** the sausage portions (1) accepted by the accelerating device (8) are aligned in the transport direction of the accelerating belt (8).

15. The method according to one of the Claims 12 to 14, **characterised in that** when n sausage portions (1) are to be transferred in a row, of n sausage portions consecutively incoming on the accelerating device (8) initially the first incoming sausage portion n₁ is pushed sideways at a first point (A) from the accelerating device (8) and then the nth incoming sausage portion (1) is pushed at an nth position (B, C), which is located before the n-1th position in the transport direction of the accelerating device (8), from the accelerating device (8).

16. The method according to Claim 15, **characterised in that** the sausage portions (1) are pushed from the accelerating device by a rotary transfer vane (12), which comprises n carriage plates (14), which are consecutively distributed uniformly over the circumference of the shaft (13) of the rotary transfer vane (12) in the transport direction and are positioned such that by rotating the shaft (13) they push the consecutively following sausage portions (19) one after the other from the accelerating device (8) at the n positions (A, B, C).

17. The method according to one of the Claims 12 or 16, **characterised in that** the sausage portions (1) are transferred by the accelerating device (8) into a drum magazine (10).

18. The method according to one of the Claims 12 to 17, **characterised in that** when n sausage portions are to be transferred in a row, n sausage portions are pushed from the accelerating device (8) onto a longitudinal groove (11) of the drum magazine (10), whereupon the drum magazine (10) rotates to transfer the n sausage portions in a row, wherein after the rotation a new longitudinal groove (11) stands ready to accept the next sausage portions (1).

19. The device according to at least one of the Claims 4 to 11, **characterised in that** the carriage plate 14 is formed from a plurality of carriage plate segments (114, 214, 314) which are pushed onto the shaft 13.

20. The device according to Claim 19, **characterised in that** one of the carriage plate segments (114) comprises a baffle plate (15 a).

## Revendications

1. Dispositif pour la distribution ordonnée de portions de saucisses (1) séparées à partir d'une machine de remplissage (2), **caractérisé par**
un dispositif d'accélération (8), qui reprend en une rangée les portions de saucisses (1) d'une machine de remplissage (2), et
un dispositif de transfert (12), qui pousse latéralement du dispositif d'accélération (8) les portions de saucisses (1) individuelles en des endroits définis de ce dernier.

2. Dispositif suivant la revendication 1, **caractérisé en ce que** le dispositif d'accélération (8) comprend une bande accélératrice (8) qui, soit tourne plus vite qu'un dispositif de transport (7) de la machine de remplissage, soit tourne momentanément plus vite lors du passage d'une portion de saucisse (1) ou d'un point de séparation de deux portions de saucisses (1), de telle sorte qu'il en résulte un intervalle (20) entre les portions de saucisses individuelles.

3. Dispositif suivant l'une au moins des revendications 1 et 2, **caractérisé en ce que** le dispositif d'accélération (8) présente un guidage latéral (9).

4. Dispositif suivant l'une au moins des revendications précédentes, **caractérisé en ce que** le dispositif de transfert (12) comprend un tiroir rotatif de transfert (12), sur l'arbre (13) duquel est montée au moins une plaque d'entraînement (14), qui pousse la portion de saucisse latéralement du dispositif d'accélération (8).

5. Dispositif suivant l'une au moins des revendica-t.ions précédentes, **caractérisé en ce qu'une** chicane (15) est respectivement disposée sur l'extrémité arrière, dans la direction de transport T, de la plaque d'entraînement (14), laquelle chicane s'étend essentiellement de façon perpendiculaire à la direction de transport T.

6. Dispositif suivant l'une au moins des revendications précédentes, **caractérisé en ce que** les plaques d'entraînement et chicanes (14, 15) sont montées de façon interchangeable sur l'arbre (13), de préférence avec une possibilité d'emboîtement.

7. Dispositif suivant l'une au moins des revendications précédentes, **caractérisé en ce que** le nombre n des plaques d'entraînement (14) correspond au nombre de portions de saucisses n, qui sont transférées les unes après les autres en une rangée du dispositif d'accélération (8) par le dispositif de transfert (12), les plaques d'entraînement étant réparties régulièrement les unes derrière les autres dans la direction de transport T sur le pourtour de l'arbre (13).

8. Dispositif suivant l'une au moins des revendications de brevet précédentes, **caractérisé en ce que** le dispositif présente pour chaque plaque d'entraînement (15) un détecteur (B1, B2), qui détecte la présence d'une portion de saucisse (1) dans la zone de la plaque d'entraînement (15).

9. Dispositif suivant l'une au moins des revendications 1 à 8, **caractérisé en ce que** le dispositif comprend en outre un magasin (10), qui reprend les portions de saucisses (1), poussées latéralement du dispositif d'accélération (8).

10. Dispositif suivant l'une au moins des revendications précédentes, **caractérisé en ce que** le magasin (10) est un magasin à tambour, qui comporte plusieurs cannelures longitudinales (11) réparties sur le pourtour pour recevoir des portions de saucisses (1).

11. Dispositif suivant l'une au moins des revendications 1 à 10, **caractérisé en ce qu'**une autre bande transporteuse (16) est disposée à la suite du dispositif de transfert (12), laquelle bande se déplace perpendiculairement à la direction de transport du dispositif d'accélération (8).

12. Procédé de distribution ordonnée de portions de saucisses (1), dans lequel
les saucisses partagées remplies sont séparées en portions de saucisses (1), puis reprises par un dispositif d'accélération (8) et acheminées puis,
les portions de saucisses sont poussées latéralement du dispositif d'accélération (8) en des endroits définis de ce dernier.

13. Procédé suivant la revendication 12, **caractérisé en ce que** le dispositif d'accélération (8), soit tourne plus vite qu'un dispositif de transport de la machine de remplissage (2), soit tourne plus vite lors du passage d'une portion de saucisse ou du point de séparation de deux portions de saucisses (1), de telle sorte qu'il en résulte un intervalle entre les portions de saucisses.

14. Procédé suivant l'une des revendications 12 et 13, **caractérisé en ce que** les portions de saucisses (1), reçues par le dispositif d'accélération (8), sont orientées dans la direction de transport de la bande accélératrice (8).

15. Procédé suivant l'une des revendications 12 à 14, **caractérisé en ce que**, lorsque n portions de saucisses (1) doivent être transférées en une rangée, la portion de saucisse n₁ d'abord admise, sur n portions de saucisses admises successivement sur le dispositif d'accélération (8), est d'abord poussée latéralement du dispositif d'accélération (8) en un premier endroit (A), puis la n^{ième} portion de saucisse (1) admise est poussée du dispositif d'accélération (8) en un n^{ième} endroit (B, C), qui se situe dans la direction de transport avant le n-1^{ième} endroit.

16. Procédé suivant la revendication 15, **caractérisé en ce que** les portions de saucisses (1) sont poussées par un tiroir rotatif de transfert (12) du dispositif d'accélération, lequel tiroir comporte n plaques d'entraînement (14) réparties et positionnées dans la direction de transport les unes après les autres, régulièrement sur le pourtour de l'arbre (13) du tiroir de transfert (12), de telle sorte qu'elles poussent les portions de saucisses (1) successives, les unes après les autres, du dispositif d'accélération (8) aux n endroits (A, B, C) par rotation de l'arbre (13).

17. Procédé suivant l'une des revendications 12 à 16, **caractérisé en ce que** les portions de saucisses (1) sont transférées du dispositif d'accélération (8) dans un magasin à tambour (10).

18. Procédé suivant l'une des revendications 12 à 17, **caractérisé en ce que**, lorsque n portions de saucisses doivent être transférées en une rangée, n portions de saucisses sont poussées du dispositif d'accélération (8) sur une cannelure longitudinale (11) du magasin à tambour (10), à la suite de quoi le magasin à tambour (10) tourne pour délivrer les n portions de saucisses en une rangée, une nouvelle cannelure longitudinale (11) pour recevoir les portions de saucisses (1) suivantes étant disponible après la rotation.

19. Dispositif suivant l'une au moins des revendications 4 à 11, **caractérisé en ce que** la plaque d'entraînement (14) est formée de plusieurs segments de plaque d'entraînement (114, 214, 314), qui sont emboîtés sur l'arbre (13).

20. Dispositif suivant la revendication 19, **caractérisé en ce que** l'un des segments de plaque d'entraînement (114) comprend une chicane (15a).
